Europäisches Patentamt

European Patent Office

Office européen des brevets

(11) Veröffentlichungsnummer: **0 205 087 B1**

# EUROPÄISCHE PATENTSCHRIFT

(45) Veröffentlichungstag der Patentschrift: **16.12.92**

(51) Int. Cl.5: **H04N 1/18**

(21) Anmeldenummer: **86107571.1**

(22) Anmeldetag: **04.06.86**

(54) **Vorrichtung zur elektronischen Aufnahme von Bildern.**

(30) Priorität: **13.06.85 DE 3521157**

(43) Veröffentlichungstag der Anmeldung:
**17.12.86 Patentblatt 86/51**

(45) Bekanntmachung des Hinweises auf die Patenterteilung:
**16.12.92 Patentblatt 92/51**

(84) Benannte Vertragsstaaten:
**FR GB IT**

(56) Entgegenhaltungen:
**EP-A- 0 142 865**
**DE-A- 2 822 639**
**DE-A- 3 035 550**
**DE-A- 3 339 256**
**DE-A- 3 418 366**

(73) Patentinhaber: **TELEFUNKEN electronic GmbH**
**Theresienstrasse 2**
**W-7100 Heilbronn(DE)**

(72) Erfinder: **Wagner, Elmar, Dr. Dipl.-Phys.**
**Goerdelerstrasse 12**
**W-7100 Heilbronn(DE)**

(74) Vertreter: **Maute, Hans-Jürgen, Dipl.-Ing.**
**TELEFUNKEN electronic GmbH Theresien-**
**strasse 2**
**W-7100 Heilbronn(DE)**

**Beschreibung**

Die Erfindung betrifft eine Vorrichtung zur elektronischen Aufnahme von Bildern mit einer optischen, Strahlung emittierenden Beleuchtungsvorrichtung und einem Detektorsystem zum Detektieren der empfangenen Bildinformation, wobei ein sequentiell ansteuerbares System strahlungsaussendender Elemente vorgesehen ist und das aufzunehmende Bild mittels der sequentiell ansteuerbaren, strahlungsaussendenden Elemente optisch partiell abgetastet wird.

Eine derartige Vorrichtung ist aus der DE-A-34 18 366 bekannt.

In der modernen Datentechnik werden heute Bilder bzw. Dokumente wie Schriften oder Graphiken elektronisch erfaßt und auf einem Bildschirm oder Drucker wiedergegeben. Die erhaltenen Daten können unmittelbar wiedergegeben oder zunächst gespeichert werden. Die Datenübermittlung erfolgt über Datenleitungen, die auch größere Entfernungen überbrücken können. Ausgegeben werden die Daten über Druckeinheiten, die beispielsweise nach dem elektrophotographischen Prinzip unter Verwendung hochauflösender Leuchtdiodenzeilen arbeiten. Zur Datenerfassung wird das zu erfassende Bild bzw. Dokument zunächst beleuchtet. Die Bildbeleuchtung führt zu einem reflektierten Signal, welches von einem optischen Scanner erfaßt wird. Als optischer Scanner wird beispielsweise ein Detektor-Array verwendet, welches z. B. aus Detektordioden besteht. Die beschriebene Dokumentenerfassung bedeutet eine Digitalisierung von Dokumenten in Form einer 2-bit-Auflösung (schwarz/weiß) oder mit höherer Auflösung in Form von Grautönen.

Bei diesen bekannten Verfahren der elektrooptischen Abtasttechniken erfolgt eine gleichmäßige und konstante Beleuchtung des zu erfassenden Bildausschnitts. Die elektronische Erfassung erfolgt durch Abbildung des Bildausschnitts auf eine Anordnung von Detektoren mit ausreichend hoher Auflösung, die die vom auszubildenden Dokument reflektierte Strahlung in elektrische Signale umwandelt. Die bekannte elektro-optische Abtasttechnik hat den Nachteil, daß ein relativ großer Bildausschnitt gleichmäßig und konstant ausgeleuchtet werden muß, weil bei unterschiedlicher Ausleuchtung eine Signalverfälschung auftreten kann. Ein weiterer Nachteil der bekannten elektro-optischen Abtasttechnik besteht darin, daß die von vielen Stellen des Bildausschnittes reflektierten Strahlen einen störenden Untergrund im Signal erzeugen können.

Der Erfindung liegt die Aufgabe zugrunde, eine Vorrichtung zur elektronischen Aufnahme von Bildern anzugeben, die diese Nachteile nicht aufweist, keine konstante und gleichmäßige Ausleuchtung eines relativ großen Bildausschnittes erfordert und bei der eine hohe Auslesegeschwindigkeit bei störungsfreier Wiedergabe möglich ist.

Diese Aufgabe wird bei einer Vorrichtung der eingangs erwähnten Art nach der Erfindung dadurch gelöst, daß bei der sequentiellen Ansteuerung der strahlungsaussendenden Elemente werden mehrere strahlungsaussendende Elemente gleichzeitig angesteuert werden, wobei jedoch nur solche Elemente gleichzeitig angesteuert werden, die einen solchen Abstand voneinander haben, daß die von ihnen ausgelösten reflektierten Strahlen einander nicht beeinflussen.

Als System strahlungsaussendender Elemente wird beispielsweise eine lineare Anordnung strahlungsaussendender Elemente verwendet, die über eine elektronische Schaltung angesteuert wird. Ein solches System ist als Belichtungsmodul für elektrophotographische Drucker bereits auf dem Markt, so daß die Erfindung mit relativ einfachen Mitteln realisiert werden kann. Die strahlungsaussendenden Elemente sind beispielsweise Leuchtdioden und das System strahlungsaussendender Elemente ist beispielsweise eine Leuchtdioden-Zeile.

Bei der Vorrichtung nach der Erfindung wird also das zu erfassende Bild (Schrift oder Graphik) nicht in seiner Gesamtheit auf ein Mal, sondern punktweise belichtet und in seiner Gesamtheit nacheinander abgetastet. Die partielle Belichtung erfolgt an mehreren Stellen gleichzeitig, wobei diese Stellen so weit voneinander entfernt sein müssen, daß die von den beleuchteten Stellen reflektierten Signale, die von einer einfachen Detektoranordnung geringer Ortsauslösung empfangen werden, einander nicht beeinflussen. Die Schwarz/Weiß-Analyse erfolgt aus der Höhe des Detektor-Signals, und die Ortsinformation ergibt sich aus dem Ansteuer-Muster des optischen Sendesystems.

Die Erfindung wird im folgenden an einem Ausführungsbeispiel erläutert.

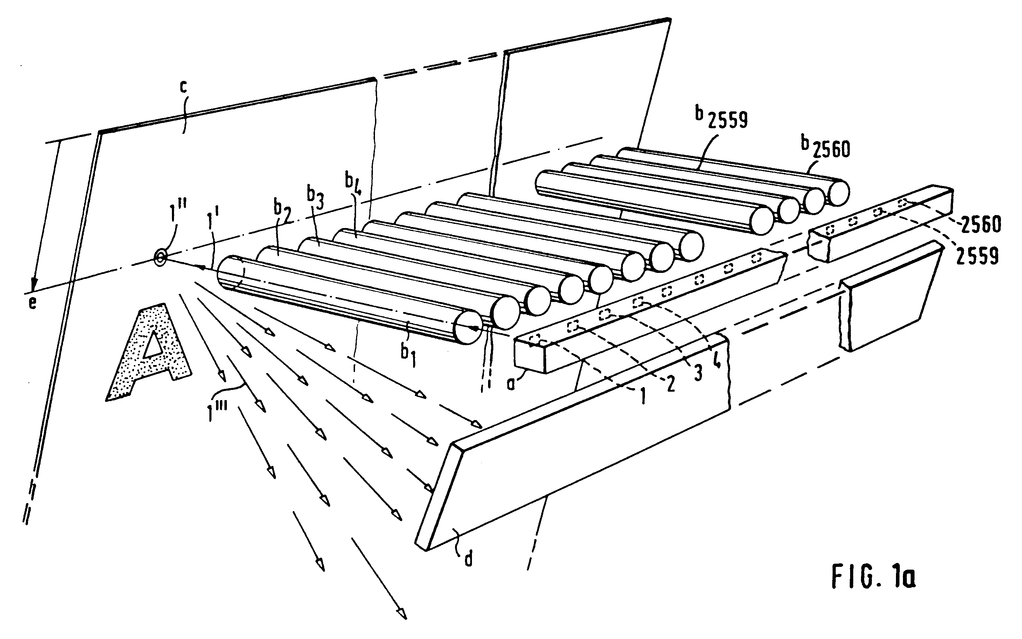

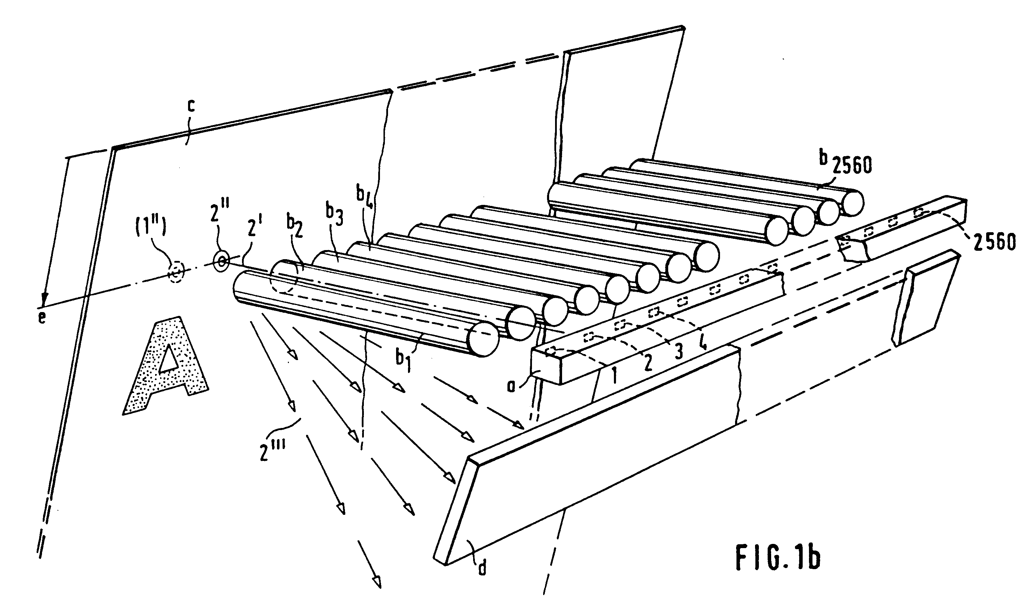

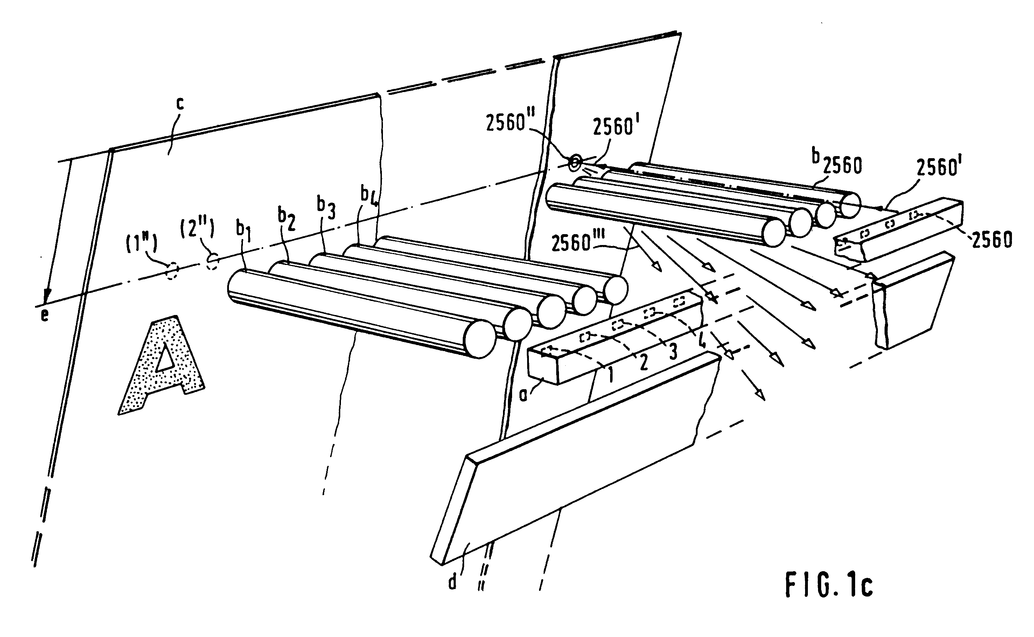

Die Figur 1 (1a bis 1c) zeigt eine Vorrichtung zur elektronischen Aufnahme von Bildern nach der Erfindung mit einer Leuchtdioden-Zeile a, einem Linsensystem b und einem Detektor d. Als Leuchtdiodenzeile kann beispielsweise eine in elektrophotographischen Druckern verwendete Beleuchtungseinheit benutzt werden. Eine solche Leuchtdiodenzeile (a) hat beispielsweise eine Länge, die dem Format eines A4-Blattes entspricht, und weist beispielsweise 2 560 Leuchtdioden auf. Die Leuchtdioden der Leuchtdiodenzeile haben einen sehr geringen Abstand voneinander, damit möglichst viele Punkte der abzubildenden Vorlage erfasst werden und dadurch ein hohes Auflösungsvermögen erzielt wird. Auf 1 mm Länge sind bei einer Leuchtdioden-Zeile beispielsweise 12 oder 16 Leuchtdioden untergebracht, so daß die Leuchtdioden der Leuchtdioden-Zeile beispielsweise einen Abstand von 1/12 mm oder 1/16 mm voneinander haben.

Die abzubildende Vorlage besteht im Ausführungsbeispiel der Figur 1 (1a bis 1c) aus einem Stück weißen Papier c, auf dem sich der Großbuchstabe "A" befindet, der mit der Vorrichtung nach der Erfindung elektronisch erfaßt werden soll.

Die elektronische Erfassung der Vorlage c erfolgt nach der Erfindung dadurch, daß die Vorlage c punktweise beleuchtet wird, und zwar mit Hilfe der Leuchtdioden 1 ... n (n = Anzahl der Leuchtdiodenzeile). Beim Ausführungsbeispiel der Figur 1 hat die Leuchtdiodenzeile 2 560 Leuchtdioden. Die punktweise Beleuchtung der Vorlage c erfolgt dadurch, daß die Leuchtdioden der Leuchtdioden-Zeile a nacheinander angesteuert werden. Das Ausführungsbeispiel der Figur 1a zeigt den Fall, daß die erste Leuchtdiode 1 der Leuchtdioden-Zeile a angesteuert ist, während die anderen Leuchtdioden (2 ... n) der Leuchtdiodenzeile a beim Ausführungsbeispiel der Figur 1a nicht angesteuert sind und deshalb auch nicht leuchten. Infolge der Ansteuerung liefert die Leuchtdiode 1 im Ausführungsbeispiel der Figur 1a einen Lichtstrahl 1', der durch eine Optik b fokusiert wird und im Punkt 1'' auf die Vorlage c auftrifft. Die Optik b ist im Ausführungsbeispiel der Figur 1 ein Linsensystem mit einer Vielzahl von Gradienten-Index-Einzellinsen ($b_1$ ... $b_m$). Im Ausführungsbeispiel der Figur 1 ist jeder Leuchtdiode eine Einzellinse zugeordnet, so daß entsprechend der Anzahl der Leuchtdioden 2 560 Einzellinsen vorhanden sind ( n = m = 2 560). Der im Punkt 1'' auftreffende Lichtstrahl 1' wird im Punkt 1'' diffus reflektiert. Die Strahlungsstärke der reflektierten Strahlung 1''' entspricht dem Reflektionsgrad des Bildpunktes 1''. Die von der Vorlage c reflektierten Lichtstrahlen erhalten in ihrer Amplitude eine Information, die den Schwarz/Weiß-Verhältnissen am jeweiligen Reflektionspunkt entspricht. Ist die Vorlage an einem Reflektionspunkt weiß, so ist die von diesem Reflektionspunkt reflektierte Strahlung stärker als eine Reflektionsstrahlung, die von einem Punkt der Vorlage ausgeht, der schwarz ist. Dadurch ist es möglich, daß die reflektierte Strahlung eine Schwarz/Weiß-Information liefert, die den Schwarz/Weiß-Verhältnissen der Vorlage entspricht. Ein Teil der reflektierten Strahlung wird entsprechend dem Raumwinkel, den der Detektor d, bezogen auf den Bildpunkt 1'' ausfüllt, vom Detektor d erfaßt und in ein elektrisches Signal umgewandelt. Ein Detektor besteht beispielsweise aus einer pin-Diode.

Das Detektorsignal wird, beispielsweise unter Verwendung eines Komparators, in ein Digitalsignal umgewandelt, und zwar beispielsweise in Form einer 2-bit-Auflösung (Schwarz/Weiß). Die erhaltenen Digitalsignale können gespeichert oder unmittelbar zur Bildwiedergabe benutzt werden. Die Ortsinformation ergibt sich aus dem Ansteuer-Muster des optischen Sendesystems, welches im vorliegenden Fall der Figur 1 eine Leuchtdioden-Zeile ist. Da beim Ausführungsbeispiel der Figur 1 die Leuchtdioden nacheinander angesteuert werden, ist das Ansteuermuster, welches auch für die Wiedergabe Verwendung findet, in diesem Fall besonders einfach.

Die Figur 1b unterscheidet sich von der Figur 1a dadurch, daß anstelle der ersten Leuchdiode 1 bereits die zweite Leuchtdiode 2 angesteuert ist, so daß nur die zweite Leuchtdiode leuchtet (Strahl 2'). Bei der Figur 1c sind sämtliche Leuchtdioden der Leuchtdioden-Zeile a mit Ausnahme der letzten Leuchtdiode bereits ausgesteuert worden, so daß im Ausführungsbeispiel der Figur 1c die letzte Leuchtdiode $a_{2\ 560}$ infolge Ansteuerung ein Leuchtsignal liefert.

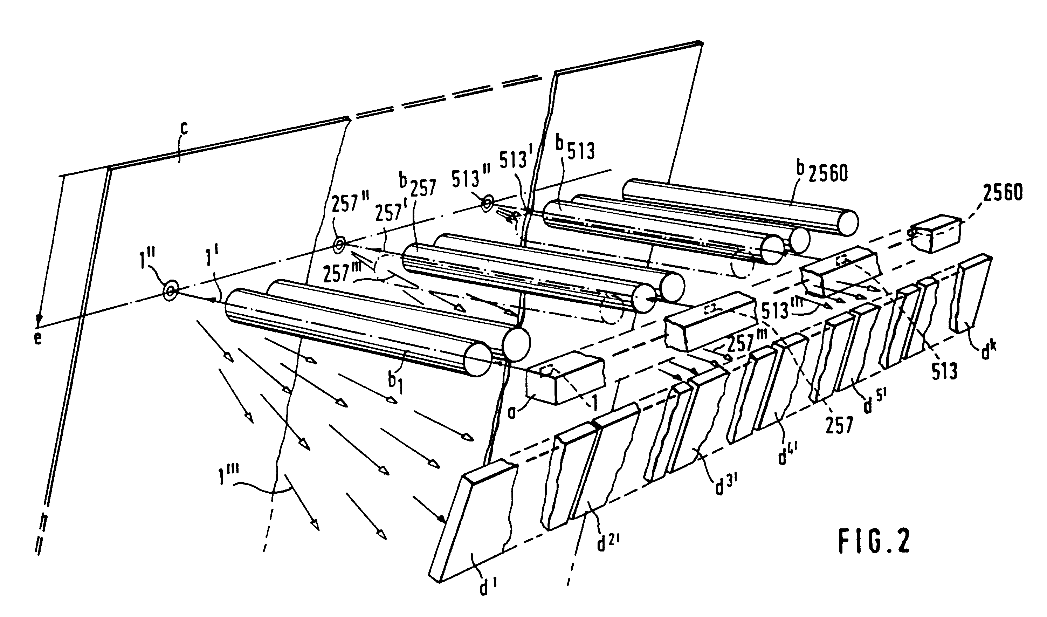

In der Praxis wird man eine Vielzahl (d', d'', d''' ...) von Detektoren entsprechend der Vorrichtung der Figur 2, in der natürlich aus zeichnerischen Gründen nur wenige Detektoren dargestellt sein können, verwenden. Diese Ausführungsform mit einer Vielzahl von Detektoren hat außerdem den Vorteil, daß mehrere Leuchtdioden, die einen entsprechenden Abstand voneinander haben (Abstand beispielsweise 256 Leuchtdioden), gleichzeitig leuchten können. Bei Verwendung einer Leuchtdiodenzeile mit 2 560 Leuchtdioden lassen sich somit 10 Bildpunkte gleichzeitig erfassen.

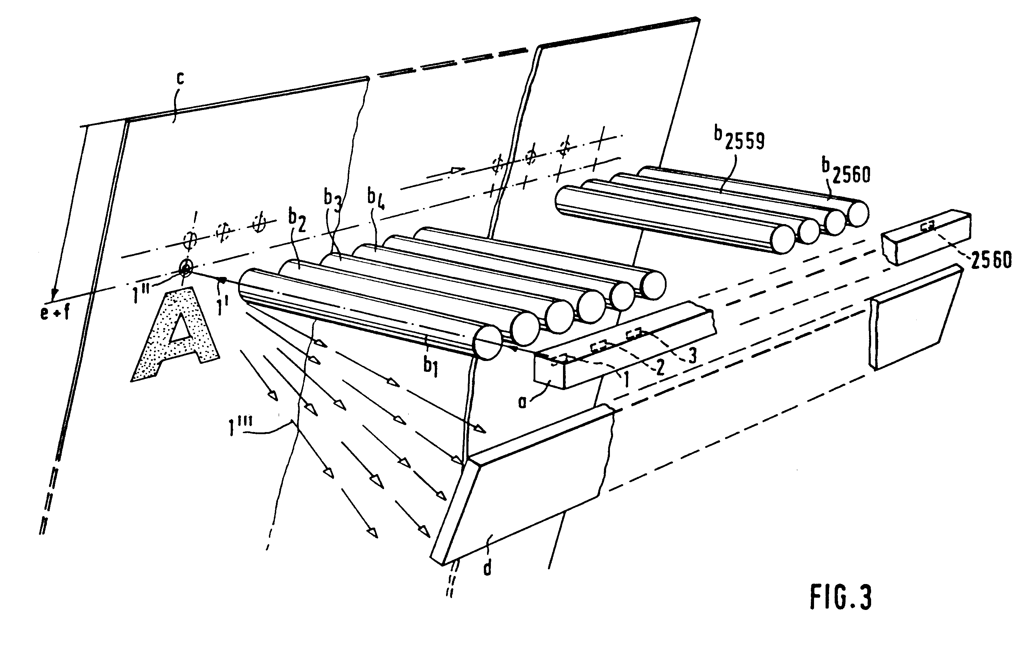

Ist man beim sequentiellen Durchsteuern der Leuchtdioden der Leuchtdioden-Zeile a bei der letzten und damit nten Leuchtdiode $a_{2\ 560}$ angelangt, so wird die Vorlage c verschoben, und zwar so weit, daß entsprechend der Figur 3 die Leuchtdioden-Zeile die nächste Zeile der Vorlage sequentiell belichtet. Die Vorlage c darf jeweils nur so weit verschoben werden (Teilschritt f), daß die erforderliche Auflösung gewährleistet ist. Der jeweilige Vorschub entspricht somit vorzugsweise dem Abstand der Leuchtdioden voneinander. Der Vorschub erfolgt von unten nach oben, wenn die Vorlage von oben nach unten mit den Lichtstrahlen abgetastet werden soll, und umgekehrt.

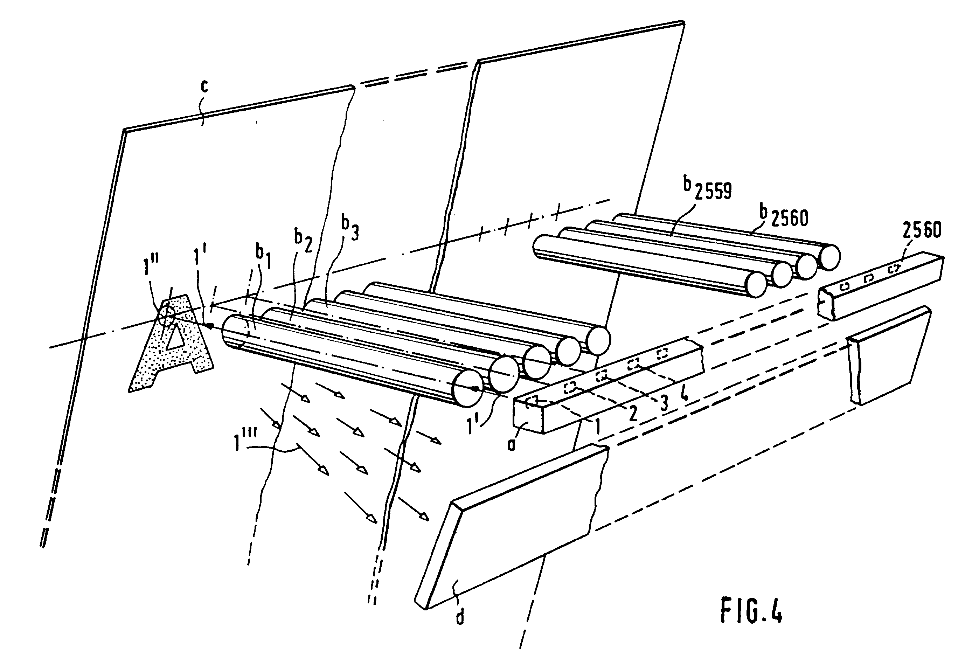

Die Figur 4 zeigt den Fall, daß bereits eine Vielzahl von Vorschüben erfolgt ist und daß man mit dem Lichtpunkt 1'' beim Buchstaben A angelangt ist.

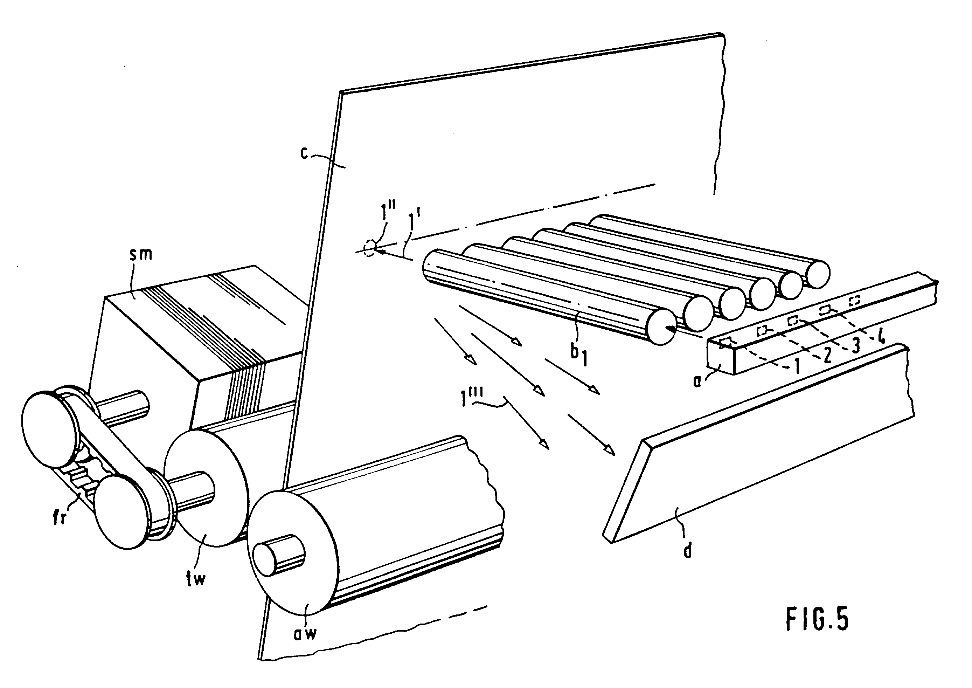

Die Figur 5 zeigt den Vorschub, der zur Verschiebung der Vorlage c dient. Der Vorschub besteht im Beispiel der Figur 5 aus einem Schrittmotor sm, einer Transportwalze tw und einer Andrückwalze aw. Die Transportwalze tw wird über einen Flachzahnriemen fr angetrieben.

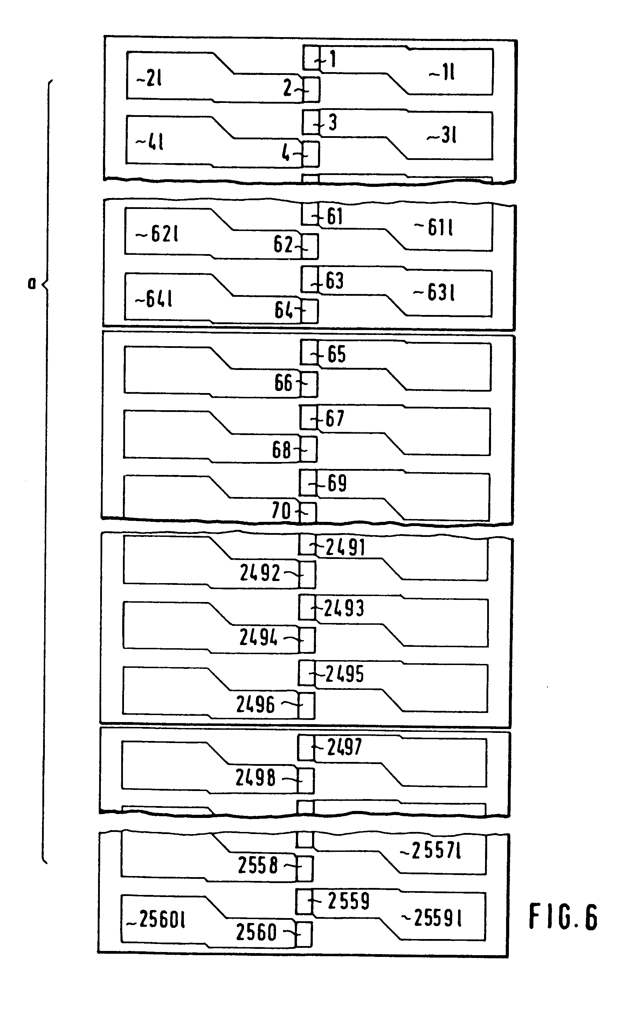

Die Figur 6 zeigt eine LED-Zeile a mit 2 560 Leuchtdioden. Die in Planartechnik hergestellten Leuchtdioden (1 ... 2 560) werden durch jeweils eine Leitbahn (1l ... 2 5601) kontaktiert. Die Gesamtzeile a besteht aus mehreren Halbleiter-Chips, von denen jede beispielsweise 64 Leuchtdioden aufweist.

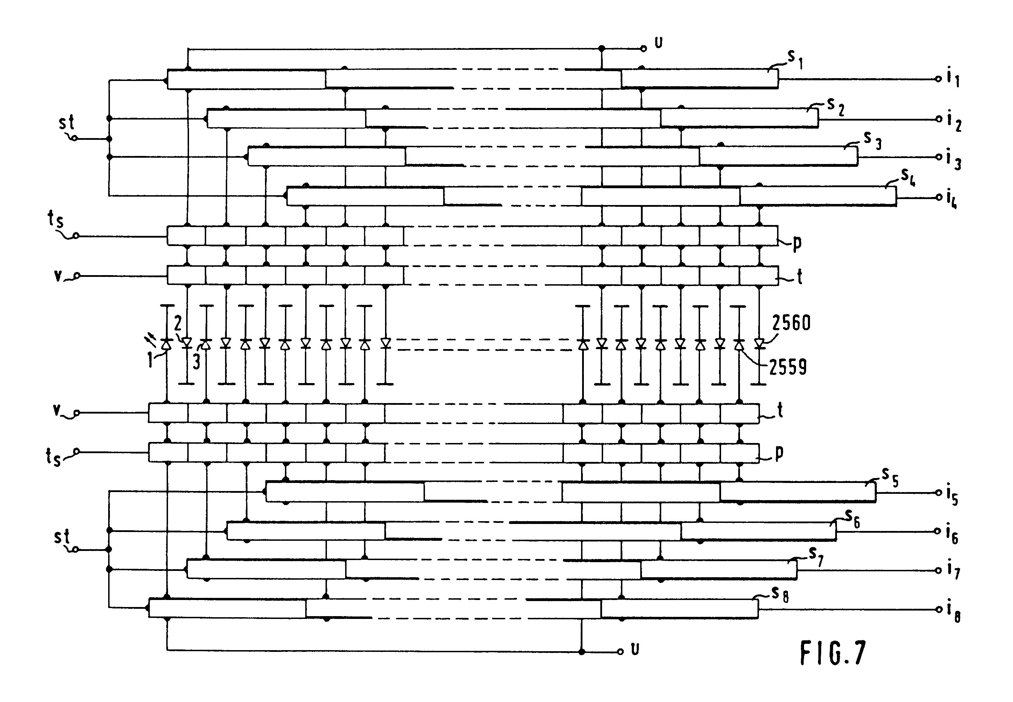

Eine Ausführungsform für eine computergerechte Ansteuerung einer LED-Zeile zeigt die Figur 7. Über insgesamt 8 Dateneingänge $i_1 ... i_8$ wird das Bitmuster, entsprechend dem die LED-Zeile aufleuchten soll, in 8 parallele Schieberegister ($s_1 ... s_8$) geladen. Die Steuerung dieses Ladevorganges erfolgt über ein Steuersignal st, das an alle Schieberegister gleichzeitig angelegt wird. Entspricht der Inhalt des Schieberegisters dem gewünschten Bitmuster, so wird über ein Steuersignal $t_s$ der Inhalt des Schieberegisters in den Pufferspeicher p übernommen. Über das Aktivierungssignal v werden die Treiberstufen t eingeschaltet, die dann die entsprechenden Leuchtdioden gemäß dem im Pufferspeicher abgespeicherten Bitmuster betreiben.

## Patentansprüche

1. Vorrichtung zur elektronischen Aufnahme von Bildern mit einer optischen, Strahlung emittierenden Beleuchtungsvorrichtung und einem Detektorsystem zum Detektieren der empfangenen Bildinformation, wobei ein sequentiell ansteuerbares System strahlungsaussendender Elemente vorgesehen ist und das aufzunehmende Bild mittels der sequentiell ansteuerbaren, strahlungsaussendenden Elemente optisch partiell abgetastet wird, dadurch gekennzeichnet, daß bei der sequentiellen Ansteuerung der strahlungsaussendenden Elemente mehrere strahlungsaussendende Elemente gleichzeitig angesteuert werden, wobei jedoch nur solche Elemente gleichzeitig angesteuert werden, die einen solchen Abstand voneinander haben, daß die von ihnen ausgelösten reflektierten Strahlen einander nicht beeinflussen.

2. Vorrichtung nach Anspruch 1, dadurch gekennzeichnet, daß das System strahlungsaussendender Elemente eine lineare Anordnung strahlungsaussendender Elemente ist, die über eine Logikschaltung angesteuert wird.

3. Vorrichtung nach Anspruch 1 oder 2, dadurch gekennzeichnet, daß die strahlungsaussendenden Elemente Leuchtdioden sind.

4. Vorrichtung nach einem der Ansprüche 1 bis 3, dadurch gekennzeichnet, daß das System strahlungsaussendender Elemente eine Leuchtdioden-Zeile ist.

5. Vorrichtung nach einem der Ansprüche 1 bis 4, dadurch gekennzeichnet, daß ein Vorschub vorgesehen ist, der die Vorlage weiterschiebt, wenn sämtliche Leuchtdioden der Leuchtdioden-Zeile durchgesteuert sind.

## Claims

1. Apparatus for the electronic recording of images including an optical, beam emitting illuminating device and a detector system for the detection of the received image information, wherein there is provided a sequentially drivable system of beam emitting elements and the image to be recorded is partially optically scanned by means of the sequentially drivable system of beam emitting elements, characterised in that, for the sequential driving of the beam emitting elements, a plurality of beam emitting elements are driven simultaneously whereby however, only such elements are simultaneously driven which have such a spacing from one another that the reflected beams produced by them do not interfere with one another.

2. Apparatus in accordance with Claim 1, characterised in that, the system of beam emitting elements is a linear array of beam emitting elements which is driven by a logic circuit.

3. Apparatus in accordance with Claim 1 or 2, characterised in that, the beam emitting elements are light emitting diodes.

4. Apparatus in accordance with any of the Claims 1 to 3, characterised in that, the system of beam emitting elements is a line of light emitting diodes.

5. Apparatus in accordance with any of the Claims 1 to 4, characterised in that, a feed is provided which advances the original when all the light emitting diodes of the line of light emitting diodes have been turned on.

## Revendications

1. Appareil pour la lecture électronique d'images, comprenant un dispositif d'éclairage optique, émettant un rayonnement, et un système de détection pour détecter l'information d'image reçue, appareil dans lequel est prévu un système d'éléments émetteurs de rayonnement commandés séquentiellement et dans lequel l'image à lire est explorée partiellement, par voie optique, au moyen des éléments émetteurs de rayonnement commandés séquentiellement, caractérisé en ce que, pour la commande séquentielle des éléments émetteurs de rayonnement, plusieurs de ces éléments sont commandés simultanément, mais de manière que soient seulement commandés en même temps des éléments ayant une telle distance les uns des autres que les rayons réfléchis produits par eux ne s'influencent pas mutuellement.

2. Appareil selon la revendication 1, caractérisé en ce que le système d'éléments émetteurs de rayonnement est une disposition linéaire d'éléments émetteurs de rayonnement, qui est commandée au moyen d'un circuit logique.

3. Appareil selon la revendication 1 ou 2, caractérisé en ce que les éléments émetteurs de rayonnement sont des diodes électroluminescentes.

4. Appareil selon une des revendications 1 à 3, caractérisé en ce que le système d'éléments émetteurs de rayonnement est une ligne ou barrette de diodes électroluminescentes.

5. Appareil selon une des revendications 1 à 4, caractérisé en ce qu'un dispositif d'avancement est prévu pour avancer le document lorsque toutes les diodes électroluminescentes de la ligne ou barrette de diodes électroluminescentes ont été commandées.

FIG. 1a

6

FIG.1b

FIG. 1c

FIG.2

FIG.3

EP 0 205 087 B1

FIG.4

EP 0 205 087 B1

FIG.5

FIG. 6

FIG.7